# FASCICULE DE BREVET EUROPEEN

(11) **EP 3 704 401 B1**
(45) Date de publication et mention de la délivrance du brevet: **10.11.2021**
(21) Numéro de dépôt: 18796084.4
(22) Date de dépôt: 08.10.2018
(51) Int. Cl.: F16J 15/3296

(54) **JOINT D'ETANCHEITE ET PROCEDE DE FABRICATION D'UN TEL JOINT D'ETANCHEITE**
DICHTUNG UND VERFAHREN ZUR HERSTELLUNG EINER SOLCHEN DICHTUNG
SEAL AND METHOD FOR PRODUCING SUCH A SEAL

(30) Priorité: 31.10.2017 FR 1760298
(43) Date de publication de la demande: 09.09.2020
(73) Titulaire: PXL Seals, 01203 Bellegarde-sur-Valserine (FR)
(72) Inventeur: ANCIAN, Mathieu, 01203 Bellegarde-sur-Valserine (FR)
(74) Mandataire: Plasseraud IP
(86) Numéro de dépôt international: PCT/FR2018/052470
(87) Numéro de publication internationale: WO 2019/086778

(56) Documents cités:
- EP-A1- 2 138 744
- WO-A1-95/06237
- DE-A1-102006 001 131

## Description

La présente invention concerne un joint d'étanchéité, ainsi qu'un procédé de fabrication d'un tel joint.

Les joints d'étanchéité sont des éléments fondamentaux de nombreuses installations, notamment de centrales hydroélectriques. Dans ces dernières, par exemple, des joints d'étanchéité font partie de vannes de très grandes dimensions, notamment des vannes du type à boisseau sphérique, couramment appelées vannes sphériques, et le contrôle ou le remplacement de ces joints nécessite de mettre à l'arrêt la partie concernée de la centrale hydroélectrique. Jusqu'à présent, de tels joints sont prévus pour une utilisation pendant dix ans, et leur remplacement constitue une opération onéreuse.

On connaît, dans d'autres domaines, des solutions pour surveiller la présence de défauts d'un joint. Par exemple, le document DE 10 2006 001 131 montre un joint utilisable dans un système de distribution d'un produit alimentaire ou biopharmaceutique, qui intègre un agencement de détection. Cependant, ce type d'intégration fragilise le joint. Dans le document DE 10 2006 001 131, il est proposé que le joint soit logé pour l'essentiel dans une gorge, seule une petite zone du joint, en pointe d'une section triangulaire, étant en saillie par rapport à la cavité logeant la partie principale du joint protégée/renforcée. Ce type d'agencement n'est pas utilisable concrètement dans des applications pour centrale hydroélectrique. On connaît également du document WO 95/06237 A1 un procédé de fabrication d'un joint d'étanchéité dans lequel un élément conducteur est noyé le long d'un bord intérieur du corps du joint pour en surveiller l'intégrité, l'élément conducteur subissant une modification de sa propriété électrique lorsque le corps du joint subit des efforts de compression.

A partir de cette situation, il existe un besoin pour contrôler l'état d'un joint d'étanchéité, notamment son vieillissement, et pour prévoir son remplacement lorsque son efficacité diminue, sans qu'il soit nécessaire de mettre à l'arrêt et ni de démonter la partie d'installation dans laquelle il se trouve, tout en proposant une structure de joint robuste.

Pour cela, un premier aspect de l'invention propose un joint d'étanchéité de forme générale annulaire qui comprend au moins une portion d'un matériau déformable à fonction d'étanchéité, au moins un capteur qui est incorporé dans la portion de matériau déformable à fonction d'étanchéité, et des moyens de connexion. Le capteur est agencé pour réaliser au moins une mesure pendant que le joint est en cours d'utilisation, et les moyens de connexion sont agencés pour transmettre à destination d'une unité de surveillance ou d'enregistrement, au moins un résultat de la mesure. Selon une caractéristique de l'invention, le capteur est adhéré au matériau déformable à fonction d'étanchéité à l'intérieur du joint, tel que défini dans la revendication 1.

Grâce à l'adhérence entre le capteur et le matériau déformable à fonction d'étanchéité, le joint ne présente pas de fragilité qui résulterait d'une délamination du matériau déformable à fonction d'étanchéité par rapport au capteur. En particulier, l'adhérence entre le capteur et le matériau déformable à fonction d'étanchéité empêche des arrachements ou des déchirures de ce dernier qui apparaîtraient à partir de l'interface entre le capteur et le matériau déformable à fonction d'étanchéité. Le matériau déformable à fonction d'étanchéité comprend un premier élastomère.

En outre, les résultats de mesures qui sont produits par le capteur pendant que le joint est en cours d'utilisation, et qui sont transmis vers l'extérieur pour être surveillés ou enregistrés, renseignent sur l'état d'usure du joint, son efficacité et son vieillissement, sans qu'il soit nécessaire de mettre à l'arrêt et ni de démonter la partie d'installation dans laquelle le joint se trouve. Autrement dit, un joint conforme à l'invention peut produire des résultats de mesures qui témoignent de son état d'usure et/ou de son efficacité d'étanchéisation, en temps réel pendant son utilisation.

Selon l'invention, on prévoit deux capteurs dans le joint, chacun des capteurs étant adhéré au matériau déformable à fonction d'étanchéité à l'intérieur du joint, le matériau déformable à fonction d'étanchéité comprenant un premier élastomère (cela permet de répartir les détections).

Toujours selon l'invention, pour chaque capteur, au moins une portion d'une toile imprégnée d'un second élastomère est disposée entre le capteur et le matériau déformable à fonction d'étanchéité, chaque surface du capteur (parmi deux surfaces opposées) étant adhérée au matériau déformable à fonction d'étanchéité par l'intermédiaire d'un empilement qui comprend :
- un film (par exemple un premier film) d'un primaire d'adhésion, qui recouvre une portion au moins de la surface du capteur en étant en contact avec la surface du capteur ;
- la portion de toile imprégnée du second élastomère, qui recouvre le film du primaire d'adhésion en étant en contact avec ce film (le premier film) du primaire d'adhésion ; et
- un autre film (second film) du primaire d'adhésion, qui est situé entre la portion de toile imprégnée du second élastomère et le matériau déformable à fonction d'étanchéité, en étant en contact avec la portion de toile imprégnée du second élastomère et avec le matériau déformable à fonction d'étanchéité.

Avec cet agencement, de manière surprenante, il a été constaté un meilleur compromis entre tenue mécanique du joint et maintien de l'adhésion des capteurs (pour permettre une détection précise/juste du vieillissement). Une cohésion du joint et une résistance contre l'apparition de délaminations sont procurées par l'effet d'adhérence procuré entre le capteur et le matériau déformable à fonction d'étanchéité.

Dans divers modes de réalisation de l'invention, l'un au moins des perfectionnements suivants peut être mis en œuvre, seul ou en combinaison de plusieurs d'entre eux :
- le matériau déformable à fonction d'étanchéité peut consister en un premier élastomère ;
- l'au moins un film d'un primaire d'adhésion, qui est disposé entre le capteur et le matériau déformable à fonction d'étanchéité, sur chacune de deux surfaces opposées du capteur, est de type monocouche. De préférence, le film du primaire d'adhésion peut aussi être disposé sur deux surfaces opposées des moyens de connexion à l'intérieur du joint ;
- le joint comprend selon l'invention en outre au moins une portion d'une toile qui est imprégnée d'un second élastomère, et qui est disposée entre le capteur et le matériau déformable à fonction d'étanchéité, en recouvrant (indirectement ou éventuellement directement, au moins dans certaines zones) l'une au moins des deux surfaces opposées du capteur. Les premier et second élastomères peuvent être identiques ou différents. De préférence, la portion de toile imprégnée du second polymère peut aussi être disposée sur l'une au moins des deux surfaces opposées des moyens de connexion à l'intérieur du joint ;
- la toile peut être à base de fibres de coton ou de fibres d'une ou plusieurs polyamides aromatiques, couramment désignées par aramides ;
- chaque surface du capteur est adhérée au matériau déformable à fonction d'étanchéité par l'intermédiaire d'e l'empilement susmentionné, de sorte que les deux films du primaire d'adhésion soient situés sur deux côtés opposés de la portion de toile imprégnée du second élastomère.
- chaque surface du capteur, qui est adhérée au matériau déformable à fonction d'étanchéité, peut être à base de polyimide ;
- le capteur peut être un capteur de pression qui est disposé à l'intérieur du joint à proximité d'une surface externe de celui-ci, de façon à mesurer une pression d'application de la surface externe du joint contre une surface rigide extérieure, ou mesurer une pression d'un fluide sur la surface externe du joint. Eventuellement, deux capteurs de pression peuvent être disposés à l'intérieur du joint, pour mesurer simultanément la pression d'application d'une partie de la surface externe du joint contre la surface rigide extérieure, et la pression du fluide sur une autre partie de la surface externe du joint ; et
- les moyens de connexion peuvent être du type connexion à fils électriques, au moins jusqu'à des raccordements électriques, ou jusqu'à une unité de traitement de résultats bruts de mesures. Une telle unité de traitement peut être destinée à être couplée à une unité de transmission, pour relayer les résultats de mesures à l'unité de surveillance et/ou d'enregistrement. Dans des modes de réalisation préférés de l'invention, l'unité de transmission peut être du type à communication sans fil, et peut être incorporée dans le joint d'étanchéité ou dans un support de celui-ci.

Un second aspect de l'invention propose un procédé de fabrication d'un joint d'étanchéité selon la revendication 8 et qui comprend entre autres les étapes suivantes :
/1/ réaliser une première partie du joint, par moulage d'une première quantité d'un matériau déformable à fonction d'étanchéité ;
/2/ disposer un capteur sur la première partie du joint, avec des moyens de connexion qui sont agencés pour transmettre un résultat de mesure destiné à être produit par le capteur ; et
/3/ réaliser une seconde partie du joint, par surmoulage d'une seconde quantité du matériau déformable à fonction d'étanchéité à partir de la première partie du joint, de sorte que le capteur soit adhéré au matériau déformable à fonction d'étanchéité des première et seconde parties du joint, entre ces deux parties du joint.

Selon l'invention, le matériau déformable à fonction d'étanchéité comprend un premier élastomère.

L'étape /1/ peut comprendre d'introduire dans un moule la première quantité du matériau déformable à fonction d'étanchéité, sous une forme crue du premier élastomère, et d'appliquer un premier traitement thermique de vulcanisation pour former la première partie du joint. Ensuite à l'étape /2/, le capteur peut être disposé sur la première partie du joint avec au moins un film d'un primaire d'adhésion qui est disposé entre le capteur et la première partie du joint, puis le capteur est recouvert avec au moins un autre film du primaire d'adhésion sur une surface du capteur qui est destinée à être recouverte par la seconde partie du joint lors de l'étape /3/. Puis l'étape /3/ peut comprendre d'introduire dans le moule, d'une façon complémentaire par rapport à la première partie du joint portant le capteur, la seconde quantité du matériau déformable à fonction d'étanchéité, encore sous la forme crue du premier élastomère, puis d'appliquer un second traitement thermique de vulcanisation pour former la seconde partie du joint et rendre définitive l'adhérence entre le capteur et les première et secondes parties du joint.

A l'étape /2/ pour des modes de mise en œuvre de l'invention qui sont encore plus préférés, les perfectionnements suivants peuvent être utilisés :
- le capteur peut être disposé sur la première partie du joint, en intercalant entre ce capteur et cette première partie du joint, une première portion de toile qui est imprégnée d'un second élastomère et enduite du primaire d'adhésion sur deux côtés opposés de cette première portion de toile, de sorte le primaire d'adhésion constitue une première interface entre la première portion de toile et la première partie du joint, et constitue une deuxième interface entre la première portion de toile et le capteur ; et
- une seconde portion de toile peut être disposée sur le capteur, d'un côté du capteur qui est opposé à la première partie du joint, la seconde portion de toile étant aussi imprégnée du second élastomère et enduite du primaire d'adhésion sur deux côtés opposés de cette seconde portion de toile, de sorte le primaire d'adhésion constitue une troisième interface entre la seconde portion de toile et le capteur, et constitue à l'issue de l'étape /3/ une quatrième interface entre la seconde portion de toile et la seconde partie du joint.

L'étape /3/ peut alors être réalisée de sorte que le premier élastomère dans la seconde quantité du matériau déformable à fonction d'étanchéité, qui est destinée à former la seconde partie du joint, et le second élastomère qui est imprégné dans les première et seconde portions de toile, soient vulcanisés simultanément.

Les première et seconde portions de toile imprégnées de second élastomère et enduites de primaire d'adhésion peuvent présenter un pouvoir de collage, si bien que la première portion de toile peut être collée sur la première partie du joint déjà vulcanisée, puis le capteur et éventuellement aussi les moyens de connexion peuvent être collés sur la première portion de toile, et la seconde portion de toile peut être collée à son tour sur le capteur et éventuellement aussi sur les moyens de connexion. Le capteur et les deux portions de toile sont alors immobilisés, et restent en place pendant l'étape /3/ sur la première partie du joint.

Un tel procédé est adapté pour fabriquer un joint d'étanchéité qui est conforme au premier aspect de l'invention.

Le joint annulaire est adapté pour être utilisé dans une centrale ou un barrage hydroélectrique, par exemple pour former une zone d'étanchéité radiale (dans un organe de vanne, typiquement). Une gorge annulaire est typiquement creusée, entre deux lèvres opposées du joint. Selon une option, chacune des lèvres peut inclure au moins un capteur, et de préférence au moins deux capteurs.

D'autres particularités et avantages de la présente invention apparaîtront dans la description ci-après d'exemples de réalisation non limitatifs, en référence aux dessins annexés, dans lesquels :
- la figure 1 est une vue en plan d'un joint qui est conforme à l'invention ;
- la figure 2 est une coupe transversale partielle du joint de la figure 1, montrant deux positionnements possibles pour un capteur de pression ; et
- la figure 3 est un agrandissement d'une partie de la figure 2.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

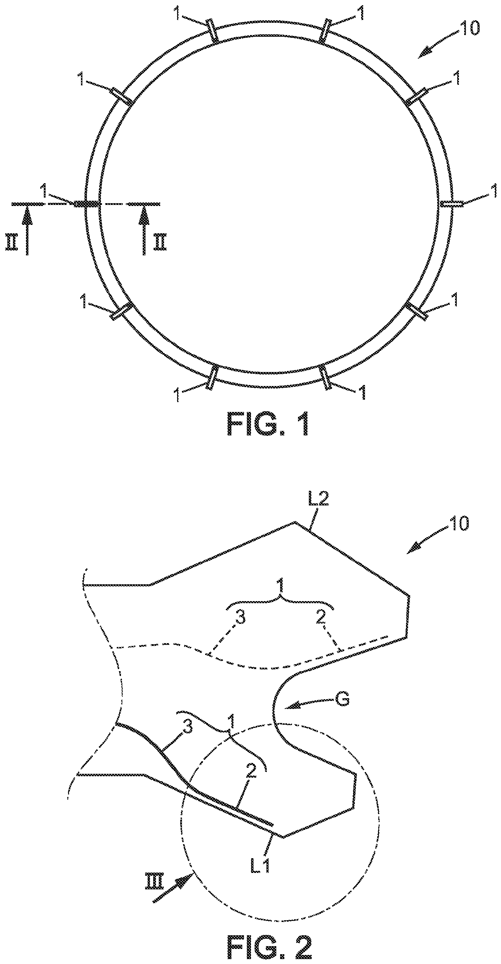

Conformément à la figure 1, un joint qui est conforme à l'invention et qui est désigné globalement par la référence 10, peut posséder une forme générale annulaire. Ce peut être un joint de vanne-papillon ou de vanne à boisseau sphérique, cette vanne pouvant faire partie d'une centrale hydroélectrique à titre d'exemple. Dans ce cas, le joint 10 peut posséder un diamètre qui est compris entre 0,40 mètre et 2 mètres, sans limitation. Toutefois, l'invention peut être appliquée sans limitation à des joints dont les fonctions et les supports sont très variés. Dans le mode de réalisation de l'invention qui est illustré par la figure 1, des dispositifs de mesure de pression 1 sont incorporés dans le joint 10 à dix emplacements qui sont répartis le long de sa forme annulaire. Une telle réalisation de l'invention avec des dispositifs de mesure de pression qui sont disposés à dix emplacements dans le joint n'est donnée qu'à titre d'illustration, et le nombre de dispositifs de mesure de pression peut être varié librement en fonction des dimensions et de la géométrie du joint. La présente description est poursuivie en référence à un seul dispositif de mesure de pression, étant entendu qu'un nombre quelconque de dispositifs de mesure de pression peut être incorporé simultanément lors des mêmes étapes de fabrication.

Le joint 10 peut être en élastomère, par exemple à base d'acrylonitrile butadiène, ou NBR pour «nitrile butadiene rubber» en anglais.

Conformément à la figure 2, le joint 10 peut posséder une forme de section à deux lèvres, qui sont désignées par les références L1 et L2. Dans ce cas, les lèvres L1 et L2 peuvent être destinées à venir en application contre deux parties différentes d'une vanne à boisseau sphérique, par exemple L1 contre le boisseau sphérique de la vanne et L2 contre le corps de la vanne. La gorge qui est intermédiaire entre les deux lèvres L1 et L2, et qui est désignée par la référence G, est destinée à être exposée au fluide contre lequel l'étanchéité doit être produite par le joint 10.

Chaque dispositif de mesure de pression 1 peut présenter une forme générale de ruban, et comporter un capteur 2 dans une partie d'extrémité distale du ruban. Des connexions électriques 3 s'étendent longitudinalement à l'intérieur du ruban, à partir du capteur 2 jusqu'à un raccordement électrique (non représenté) qui est situé à l'autre extrémité du ruban, opposée au capteur 2. Par exemple, les connexions 3 peuvent être destinées à transmettre une tension électrique continue qui est produite par le capteur 2 en tant que signal de mesure, et qui constitue le résultat de la mesure. L'ensemble du dispositif de mesure 1, ou au moins la partie de celui-ci qui est destinée à être incorporée dans le joint 10, peut être encapsulé dans un revêtement à base de polyimide, par exemple en matériau commercialisé sous la dénomination Capton® par la Société Dupont de Nemours. Bien que la présente description soit donnée à titre d'exemple pour un ou plusieurs capteurs de pression, l'Homme du métier comprendra que l'invention peut être appliquée quelle que soit la grandeur physique qui est mesurée par le capteur. Par exemple, ce peut être aussi un capteur de température, un capteur de contraintes, un capteur de déformation, etc. De tels capteurs sont connus de l'Homme du métier et disponibles commercialement.

Possiblement, les surfaces exposées du matériau d'encapsulation du dispositif de mesure 1, de chaque côté du ruban, peuvent être poncées pour favoriser des adhérences ultérieures sur ces surfaces.

La figure 2 montre en trait continu un premier positionnement possible pour le dispositif de mesure de pression 1 à l'intérieur du joint 10. Selon ce positionnement, le capteur 2 est situé à proximité d'une surface externe de la lèvre L1, de sorte que l'information de pression que transmet le dispositif de mesure 1 soit relative à la pression d'application du joint 10 contre le boisseau de la vanne. Dans la figure 2, le ruban du dispositif de mesure 1 possède une dimension longitudinale qui est parallèle au plan de la figure, et une dimension transversale de ruban qui est perpendiculaire au plan de la figure.

La figure 2 montre en plus, en traits interrompus, un second positionnement qui est aussi possible pour le dispositif de mesure de pression 1 à l'intérieur du joint 10. Avec ce second positionnement, le capteur 2 est maintenant situé à proximité de la gorge G, si bien que l'information de pression que transmet le dispositif de mesure 1 concerne la pression du fluide.

Il est possible d'appliquer l'invention en disposant dans le joint 10, deux dispositifs de mesure de pression chacun avec l'un des deux positionnements qui viennent d'être décrits. Alors, une différence entre les résultats de mesure de pression qui sont produits simultanément par les deux capteurs fournit une information sur l'efficacité d'étanchéité du joint 10 dans ses conditions d'utilisation. Pour raison de clarté, la présente description est poursuivie ci-dessous en ne considérant qu'un seul dispositif de mesure, sachant que l'Homme du métier est capable d'adapter le procédé de fabrication qui est décrit maintenant pour incorporer deux dispositifs de mesure ou plus dans le joint 10.

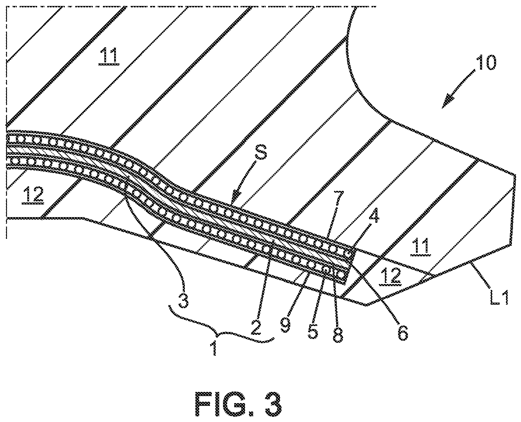

Conformément à la figure 3, une première partie du joint 10 à base d'acrylonitrile butadiène, qui est désignée par la référence 11, peut être moulée et vulcanisée dans une première étape de fabrication. Un traitement de vulcanisation qui est adapté pour de l'acrylonitrile butadiène peut être une cuisson à 160°C pendant 9 minutes et 30 secondes, par exemple. Une telle fabrication de la partie de joint 11 peut être réalisée en utilisant un moule qui correspond à la forme du joint 10 complet, mais dans lequel un insert dont la forme est complémentaire par rapport à celle de la partie de joint 11 a été introduit temporairement. L'acrylonitrile butadiène est cité ici comme exemple pour le premier élastomère qui a été évoqué dans la partie générale de la présente description.

L'insert est alors retiré du moule, de façon à découvrir la surface S de la première partie de joint 11. Possiblement, la surface S peut alors être poncée pour favoriser une adhérence ultérieure sur celle-ci.

Plus généralement, on comprend qu'une surface du matériau déformable du joint peut être fournie avant d'intégrer un capteur 2. Pour un effet d'adhérence entre le capteur et une telle surface du matériau déformable, on prévoit typiquement un empilement, visible sur la figure 3, avec un film d'un primaire d'adhésion (6, 8) en contact avec la surface du capteur (2), une portion de toile (4, 5) imprégnée d'un élastomère, et un autre film d'un primaire d'adhésion (7, 9) pour le contact avec le matériau déformable.

Dans l'exemple détaillé et non limitatif de la figure 3, deux portions de toile, qui sont désignées par les références 4 et 5 respectivement, sont découpées selon des formes qui correspondent aux faces du ruban du dispositif de mesure de pression 1. Les portions de toile 4 et 5 peuvent être imprégnées d'un second élastomère qui n'a pas encore été vulcanisé. Ce second élastomère est dit être ainsi dans sa forme crue, dans le jargon de l'Homme du métier. De préférence, l'élastomère d'imprégnation des portions de toile 4 et 5 peut être d'une nature similaire à celle d'une seconde partie de joint 12 qui sera réalisée ultérieurement, pour que l'élastomère d'imprégnation des portions de toile 4 et 5 et celui de la seconde partie de joint 12 puissent être vulcanisés lors d'un même traitement thermique. Sans limitation, la toile qui est utilisée pour les portions 4 et 5 peut être à base de coton ou d'une ou plusieurs polyamides aromatiques, couramment désignées par aramides.

Les deux portions de toile 4 et 5 imprégnées d'élastomère sont ensuite enduites, chacune sur ses deux côtés, par un primaire d'adhésion qui est adapté pour adhérer ultérieurement sur l'élastomère d'imprégnation de toile et sur les élastomères des parties de joint 11 et 12, dans l'état vulcanisé de ces élastomères, ainsi que pour adhérer sur le matériau d'encapsulation du dispositif de mesure 1.

Les deux portions de toile 4 et 5 imprégnées et enduites peuvent présenter un pouvoir collant, qui est efficace contre la partie de joint 11 et contre les surfaces du dispositif de mesure 1. Elles peuvent alors être empilées sur la partie de joint 11 dans l'ordre suivant : d'abord la portion de toile imprégnée et enduite 4 sur la surface S de la partie de joint 11, à l'emplacement voulu pour le dispositif de mesure 1 à l'intérieur du joint 10 dans son état final, puis le dispositif de mesure 1 sur la portion de toile imprégnée et enduite 4, et enfin la portion de toile imprégnée et enduite 5 sur le dispositif de mesure 1. Alternativement, l'empilement du dispositif de mesure 1 inséré entre les portions de toile imprégnées et enduites 4 et 5 peut être construit ex-situ, puis appliqué ensuite sur la partie de joint 11. La disposition de la portion de toile imprégnée et enduite 4, du dispositif de mesure 1 et de la portion de toile imprégnée et enduite 5 sur la partie de joint 11 est de préférence effectuée pendant que la partie de joint 11 reste dans le moule, après que l'insert a été retiré.

L'élastomère de la seconde partie de joint 12, par exemple encore à base d'acrylonitrile butadiène, est alors introduit dans sa forme crue dans le moule, puis un nouveau traitement thermique de vulcanisation est appliqué à l'ensemble du contenu du moule. De cette façon, la seconde partie de joint 12 et l'élastomère d'imprégnation des portions de toile 4 et 5 sont vulcanisés simultanément. Grâce à l'utilisation des portions de toile 4 et 5 qui deviennent ainsi imprégnées d'élastomère vulcanisé, et grâce aux films d'enduction des deux côtés de chaque portion de toile 4, 5 avec le primaire d'adhésion, le joint 10 complet présente une cohésion et une résistance contre l'apparition de délaminations qui sont excellentes, malgré l'insertion du dispositif de mesure 1 au sein du joint 10. Dans la figure 3, les films d'enduction de la portion de toile 4 avec le primaire d'adhésion sont désignés par les références 6 et 7, respectivement sur chaque côté de la portion 4, et les films d'enduction de la portion de toile 5 avec le primaire d'adhésion sont désignés par les références 8 et 9, respectivement sur chaque côté de la portion 5. La première partie d'empilement, comprenant le film de primaire d'adhésion 6, la portion de toile imprégnée 4 et le film de primaire d'adhésion 7, produit l'adhérence entre la première partie de joint 11 et le dispositif de mesure 1, et la seconde partie d'empilement, comprenant le film de primaire d'adhésion 8, la portion de toile imprégnée 5 et le film de primaire d'adhésion 9, produit l'adhérence entre le dispositif de mesure 1 et la seconde partie de joint 12. Par exemple, lorsque l'élastomère des parties de joint 11 et 12 et celui d'imprégnation des portions de toile 4 et 5 sont tous à base d'acrylonitrile butadiène, le primaire d'adhésion utilisé peut être à base d'un mélange qui comprend de l'éthylbenzène (C₆H₅-C₂H₅), du tétrachloroéthylène (C₂Cl₄), du trizinc bis(orthophosphate) (Zn₃(PO₄)₂) et du diméthylbenzène (C₆H₄-(CH₃)₂), ce dernier étant couramment appelé xylène. Un tel mélange pour constituer le primaire d'adhésion est commercialisé par exemple par la Société Lord sous l'appellation commerciale Chemosil 225®. L'Homme du métier sait sélectionner et adapter des compositions de primaires d'adhésion en fonction de la nature chimique de l'élastomère du joint qui constitue le matériau déformable à fonction d'étanchéité.

Le joint 10 qui a été fabriqué ainsi peut être installé au sein d'une vanne de centrale hydroélectrique. Lorsque l'eau est admise jusqu'à cette vanne, chaque dispositif de mesure de pression qui est incorporé dans le joint 10 produit un signal de mesure de pression qui est transmis par les moyens de connexion à destination d'une unité de surveillance et/ou d'enregistrement. Une telle unité de surveillance et/ou d'enregistrement peut être locale au sein de la centrale hydroélectrique, ou être déportée à l'extérieur de celle-ci. En particulier, ce peut être une plateforme qui est hébergée dans le cloud, et opérée par un fabricant du joint 10 dans le cadre de l'internet des objets, désigné par l'acronyme loT pour «Internet of Things» en anglais. La connexion entre une telle plateforme et une unité de traitement et/ou de transmission à laquelle aboutissent les moyens de connexion du dispositif de mesure 1, peut utiliser un réseau de communication externe, tel que le réseau internet.

## Revendications

1. Joint d'étanchéité (10) de forme générale annulaire, comprenant au moins une portion d'un matériau déformable à fonction d'étanchéité, au moins un capteur (2) qui est incorporé dans la portion de matériau déformable à fonction d'étanchéité, et des moyens de connexion (3), de sorte que le capteur soit agencé pour réaliser au moins une mesure pendant que le joint est en cours d'utilisation, et les moyens de connexion sont agencés pour transmettre à destination d'une unité de surveillance ou d'enregistrement, au moins un résultat de la mesure,
**caractérisé en ce qu'**il est prévu deux capteurs dans le joint de forme générale annulaire, chacun des capteurs (2) étant adhéré au matériau déformable à fonction d'étanchéité à l'intérieur du joint (10), le matériau déformable à fonction d'étanchéité comprenant un premier élastomère,
et **en ce que** pour chaque capteur desdits deux capteurs, au moins une portion d'une toile (4, 5) imprégnée d'un second élastomère est disposée entre le capteur (2) et le matériau déformable à fonction d'étanchéité, chaque surface du capteur (2) parmi deux surface opposées de ce capteur étant adhérée au matériau déformable à fonction d'étanchéité par l'intermédiaire d'un empilement qui comprend :
- un film d'un primaire d'adhésion (6, 8), qui recouvre une portion au moins de la surface du capteur (2) en étant en contact avec ladite surface du capteur ;
- la portion de toile (4, 5) imprégnée du second élastomère, qui recouvre le film du primaire d'adhésion (6, 8) en étant en contact avec ce film du primaire d'adhésion ; et
- un autre film du primaire d'adhésion (7, 9), qui est situé entre la portion de toile (4, 5) imprégnée du second élastomère et le matériau déformable à fonction d'étanchéité, en étant en contact avec ladite portion de toile imprégnée du second élastomère et avec ledit matériau déformable à fonction d'étanchéité.

2. Joint d'étanchéité (10) selon la revendication 1, dans lequel les deux capteurs comprennent :
- un premier capteur (2) sous la forme d'un capteur de pression qui est disposé à l'intérieur du joint à proximité d'une surface externe dudit joint, de façon à mesurer une pression d'application de ladite surface externe du joint contre une surface rigide extérieure ; et
- un deuxième capteur (2) sous la forme d'un capteur de pression qui est disposé à l'intérieur du joint à proximité d'une surface externe dudit joint, de façon à mesurer une pression d'un fluide sur ladite surface externe du joint.

3. Joint d'étanchéité (10) selon la revendication 1 ou 2, dans lequel le premier élastomère constituant le matériau déformable à fonction d'étanchéité (10, 11) est à base d'acrylonitrile butadiène et le second élastomère pour l'imprégnation des portions de toile (4, 5) est à base d'acrylonitrile butadiène.

4. Joint d'étanchéité (10) selon la revendication 3, dans lequel le primaire d'adhésion est à base d'un mélange qui comprend de l'éthylbenzène (C₆H₅-C₂H₅), du tétrachloroéthylène (C₂Cl₄), du trizinc bis(orthophosphate) (Zn₃(PO₄)₂) et du diméthylbenzène (C₆H₄-(CH₃)₂).

5. Joint d'étanchéité (10) selon l'une quelconque des revendications précédentes, destiné à être soumis à la pression d'un fluide sur une surface externe du joint dans un état installé au sein d'une vanne de centrale hydroélectrique.

6. Joint d'étanchéité (10) selon l'une quelconque des revendications précédentes, dans lequel une surface d'un capteur (2) desdits deux capteurs, qui est adhérée au matériau déformable à fonction d'étanchéité, est à base de polyimide.

7. Joint d'étanchéité (10) selon la revendication 2, dans lequel le joint, de forme générale annulaire, présente une coupe transversale coïncidant avec deux positionnements respectifs pour les premier et deuxième capteurs de pression, le deuxième capteur étant situé à proximité d'une gorge (G) du joint apte à être exposée au fluide contre lequel l'étanchéité doit être produite par le joint (10).

8. Procédé de fabrication d'un joint d'étanchéité (10), comprenant les étapes suivantes :
/1/ réaliser une première partie (11) du joint (10), par moulage d'une première quantité d'un matériau déformable à fonction d'étanchéité ;
/2/ disposer un capteur (2) sur la première partie (11) du joint (10), avec des moyens de connexion (3) qui sont agencés pour transmettre un résultat de mesure destiné à être produit par le capteur ; et
/3/ réaliser une seconde partie (12) du joint (10), par surmoulage d'une seconde quantité du matériau déformable à fonction d'étanchéité à partir de la première partie (11) du joint, de sorte que le capteur (2) soit adhéré au matériau déformable à fonction d'étanchéité des première et seconde parties du joint, entre lesdites première et seconde parties du joint ;
sachant que le matériau déformable à fonction d'étanchéité comprend un premier élastomère et au moins une portion d'une toile (4, 5) imprégnée d'un second élastomère est disposée entre le capteur (2) et le matériau déformable à fonction d'étanchéité, de façon à ce que chaque surface du capteur (2) parmi deux surface opposées de ce capteur est adhérée au matériau déformable à fonction d'étanchéité par l'intermédiaire d'un empilement qui comprend :
- le film du primaire d'adhésion (6, 8), qui recouvre directement une portion au moins de la surface du capteur (2) ;
- la portion de toile (4, 5) imprégnée du second élastomère, qui recouvre le film du primaire d'adhésion (6, 8) en étant en contact avec ledit premier film du primaire d'adhésion ; et
- un autre film du primaire d'adhésion (7, 9), qui est situé entre la portion de toile (4, 5) imprégnée du second élastomère et le matériau déformable à fonction d'étanchéité, en étant en contact avec ladite portion de toile imprégnée du second élastomère et avec ledit matériau déformable à fonction d'étanchéité,
ce grâce à quoi les deux films du primaire d'adhésion (6-9) sont situés sur deux côtés opposés de la portion de toile (4, 5) imprégnée du second élastomère.

9. Procédé selon la revendication 8, dans lequel
l'étape /1/ comprend d'introduire dans un moule la première quantité du matériau déformable à fonction d'étanchéité, sous une forme crue dudit premier élastomère, et d'appliquer un premier traitement thermique de vulcanisation pour former la première partie (11) du joint (10) ;
à l'étape /2/, le capteur (2) est disposé sur la première partie (11) du joint (10) avec ledit au moins un film d'un primaire d'adhésion (6, 7) qui est disposé entre le capteur et la première partie du joint, puis le capteur est recouvert avec au moins un autre film du primaire d'adhésion (8, 9) sur une surface du capteur qui est destinée à être recouverte par la seconde partie (12) du joint lors de l'étape /3/ ; et
l'étape /3/ comprend d'introduire dans le moule, d'une façon complémentaire par rapport à la première partie (11) du joint (10) portant le capteur (2), la seconde quantité du matériau déformable à fonction d'étanchéité, sous la forme crue dudit premier élastomère, puis d'appliquer un second traitement thermique de vulcanisation pour former la seconde partie (12) du joint et rendre définitive l'adhérence entre le capteur (2) et les première et secondes parties du joint.

10. Procédé selon la revendication 9, dans lequel, à l'étape /2/ :
- le capteur (2) est disposé sur la première partie (11) du joint (10), en intercalant entre ledit capteur et ladite première partie du joint, une première portion de toile (4) qui est imprégnée d'un second élastomère et enduite du primaire d'adhésion sur deux côtés opposés de ladite première portion de toile, de sorte le primaire d'adhésion constitue une première interface entre la première portion de toile et la première partie du joint, et constitue une deuxième interface entre la première portion de toile et le capteur ;
- une seconde portion de toile (5) est disposée sur le capteur (2), d'un côté dudit capteur opposé à la première partie (11) du joint (10), ladite seconde portion de toile étant aussi imprégnée du second élastomère et enduite du primaire d'adhésion sur deux côtés opposés de ladite seconde portion de toile, de sorte le primaire d'adhésion constitue une troisième interface entre la seconde portion de toile et le capteur, et constitue à l'issue de l'étape /3/ une quatrième interface entre la seconde portion de toile et la seconde partie (12) du joint ;
et l'étape /3/ est réalisée de sorte que le premier élastomère dans la seconde quantité du matériau déformable à fonction d'étanchéité, qui est destinée à former la seconde partie (12) du joint (10), et le second élastomère qui est imprégné dans les première (4) et seconde (5) portions de toile, soient vulcanisés simultanément.

## Patentansprüche

1. Allgemein ringförmige Dichtung (10), die mindestens einen Anteil aus verformbarem Material mit Dichtungsfunktion, mindestens einen Sensor (2), der in den Anteil aus verformbarem Material mit Dichtungsfunktion eingebaut ist, und Verbindungsmittel (3) umfasst, wobei der Sensor dazu eingerichtet ist, mindestens eine Messung durchzuführen, während die Dichtung in Gebrauch ist, und die Verbindungsmittel dazu eingerichtet sind, mindestens ein Ergebnis der Messung an eine Überwachungs- oder Aufzeichnungseinheit zu übertragen,
**dadurch gekennzeichnet, dass** zwei Sensoren in der allgemein ringförmigen Dichtung vorgesehen sind, wobei jeder der Sensoren (2) an das verformbare Material mit Dichtungsfunktion im Inneren der Dichtung (10) anhaftet, wobei das verformbare Material mit Dichtungsfunktion ein erstes Elastomer umfasst,
und dass für jeden Sensor der beiden Sensoren mindestens ein mit einem zweiten Elastomer imprägnierter Stoffanteil (4, 5) zwischen dem Sensor (2) und dem verformbaren Material mit Dichtungsfunktion angeordnet ist, wobei jede Oberfläche des Sensors (2) von zwei gegenüberliegenden Oberflächen dieses Sensors an dem verformbaren Material mit Dichtungsfunktion anhaftet, mittels eines Stapels der umfasst:
- einen Film aus einer Haftgrundierung (6, 8), der einen Teil zumindest der Oberfläche des Sensors (2) bedeckt, wobei er mit der Oberfläche des Sensors in Kontakt ist,
- den mit dem zweiten Elastomer imprägnierten Stoffanteil (4, 5), der den Haftgrundierungsfilm (6, 8) bedeckt, wobei er mit diesem Haftgrundierungsfilm in Kontakt ist; und
- einen weiteren Haftgrundierungsfilm (7, 9), der sich zwischen dem mit dem zweiten Elastomer imprägnierten Stoffanteil (4, 5) und dem verformbaren Material mit Dichtungsfunktion befindet, wobei er mit dem Stoffanteil, der mit dem zweiten Elastomer imprägniert ist, und mit dem verformbaren Material mit Dichtungsfunktion in Kontakt ist.

2. Dichtung (10) nach Anspruch 1, wobei die beiden Sensoren umfassen:
- einen ersten Sensor (2) in Form eines Drucksensors, der im Inneren der Dichtung in der Nähe einer Außenfläche der Dichtung angeordnet ist, um einen Anpressdruck der Außenfläche der Dichtung gegen eine starre äußere Fläche zu messen; und
- einen zweiten Sensor (2) in Form eines Drucksensors, der im Inneren der Dichtung in der Nähe einer Außenfläche der Dichtung angeordnet ist, um einen Druck eines Fluids auf die Außenfläche der Dichtung zu messen.

3. Dichtung (10) nach Anspruch 1 oder 2, wobei das erste Elastomer, aus dem das verformbare Material mit Dichtungsfunktion (10, 11) besteht, auf Acrylnitril-Butadien basiert und das zweite Elastomer zur Imprägnierung von Stoffanteilen (4, 5) auf Acrylnitril-Butadien basiert.

4. Dichtung (10) nach Anspruch 3, wobei die Haftgrundierung auf einem Gemisch basiert, das Ethylbenzol (C₆H₅-C₂H₅), Tetrachlorethylen (C₂Cl₄), Trizinkbis(orthophosphat) (Zn₃(PO₄)₂) und Dimethylbenzol (C₆H₄-(CH₃)₂) umfasst.

5. Dichtung (10) nach einem der vorhergehenden Ansprüche, die dazu bestimmt ist, im eingebauten Zustand in einem Wasserkraftwerksventil dem Druck eines Fluids auf eine Außenfläche der Dichtung ausgesetzt zu werden.

6. Dichtung (10) nach einem der vorhergehenden Ansprüche, wobei eine Oberfläche eines Sensors (2) der beiden Sensoren, die an dem verformbaren Material mit Dichtungsfunkton anhaftet, auf Polyimid basiert.

7. Dichtung (10) nach Anspruch 2, **dadurch gekennzeichnet, dass** die Dichtung, die im Allgemeinen ringförmig ist, einen Querschnitt aufweist, der mit zwei entsprechenden Positionierungen für den ersten und den zweiten Drucksensor übereinstimmt, wobei der zweite Sensor in der Nähe einer Nut (G) der Dichtung angeordnet ist, die dazu geeignet ist, dem Fluid, gegen das die Dichtung (10) abdichten soll, ausgesetzt zu werden.

8. Verfahren zur Herstellung einer Dichtung (10), umfassend die folgenden Schritte:
/1/ Herstellen eines ersten Teils (11) der Dichtung (10) durch Formen einer ersten Menge eines verformbaren Materials mit Dichtungsfunktion;
/2/ Anordnen eines Sensors (2) auf dem ersten Teil (11) der Dichtung (10), mit Verbindungsmitteln (3), die dazu eingerichtet sind, ein von dem Sensor zu erzeugendes Messergebnis zu übertragen; und
/3/ Herstellen eines zweiten Teils (12) der Dichtung (10) durch Anformen einer zweiten Menge des verformbaren Materials mit Dichtungsfunktion ausgehend von dem ersten Teil (11) der Dichtung, so dass der Sensor (2) zwischen dem ersten und dem zweiten Teil der Dichtung an das verformbare Material mit Dichtungsfunktion des ersten und des zweiten Teils der Dichtung anhaftet;
wobei das verformbare Material mit Dichtungsfunktion ein erstes Elastomer umfasst und mindestens ein mit einem zweiten Elastomer imprägnierter Stoffanteil (4,5) zwischen dem Sensor (2) und dem verformbaren Material mit Dichtungsfunktion angeordnet ist, so dass jede von zwei gegenüberliegenden Oberflächen des Sensors (2) an dem verformbaren Material mit Dichtungsfunktion anhaftet, über einen Stapel, der umfasst:
- den Haftgrundierungsfilm (6, 8), der einen Anteil zumindest der Oberfläche des Sensors (2) direkt bedeckt;
- den mit dem zweiten Elastomer imprägnierten Stoffanteil (4, 5), der den Haftgrundierungsfilm (6, 8) bedeckt, wobei er mit dem ersten Haftgrundierungsfilm in Kontakt ist; und
- einen weiteren Haftgrundierungsfilm (7, 9), der sich zwischen dem mit dem zweiten Elastomer imprägnierten Stoffanteil (4, 5) und dem verformbaren Material mit Dichtungsfunktion befindet, wobei er mit dem Stoffanteil, der mit dem zweiten Elastomer imprägniert ist und mit dem verformbaren Material mit Dichtungsfunktion in Kontakt ist;
dank dessen sich die beiden Haftgrundierungsfilme (6-9) auf zwei gegenüberliegenden Seiten des mit dem zweiten Elastomer imprägnierten Stoffanteils (4, 5) befinden.

9. Verfahren nach Anspruch 8, wobei
Schritt /1/ das Einbringen der ersten Menge des verformbaren Materials mit Dichtungsfunktion in rohem Zustand des ersten Elastomers in eine Form, und das Anwenden einer ersten Wärmebehandlung zur Vulkanisierung umfasst, um den ersten Teil (11) der Dichtung (10) zu bilden;
in Schritt /2/ der Sensor (2) mit dem mindestens einen Haftgrundierungsfilm (6, 7), der zwischen dem Sensor und dem ersten Teil der Dichtung angeordnet wird, auf dem ersten Teil (11) der Dichtung (10) angeordnet wird, dann der Sensor mit mindestens einem weiteren Haftgrundierungsfilm (8, 9) auf einer Oberfläche des Sensors bedeckt wird, die von dem zweiten Teil (12) der Dichtung in Schritt /3/ bedeckt werden soll; und
Schritt /3/ das Einbringen der zweiten Menge des verformbaren Materials mit Dichtungsfunktion in rohem Zustand des ersten Elastomers in eine Form umfasst, auf eine zum ersten Teil (11) der Dichtung (10), der den Sensor (2) trägt, komplementäre Weise, dann eine zweite Wärmebehandlung zur Vulkanisierung durchgeführt wird, um den zweiten Teil (12) der Dichtung zu bilden und die Haftung zwischen dem Sensor (2) und dem ersten und zweiten Abschnitt der Dichtung endgültig zu machen.

10. Verfahren nach Anspruch 9, wobei in Schritt /2/:
- der Sensor (2) auf dem ersten Teil (11) der Dichtung (10) angeordnet wird, wobei zwischen dem Sensor und dem ersten Teil der Dichtung ein erster Stoffanteil (4) angeordnet wird, der mit einem zweiten Elastomer imprägniert und auf zwei gegenüberliegenden Seiten des ersten Stoffanteils mit der Haftgrundierung beschichtet ist, so dass die Haftgrundierung eine erste Schnittstelle zwischen dem ersten Stoffanteil und dem ersten Teil der Dichtung und eine zweite Schnittstelle zwischen dem ersten Stoffanteil und dem Sensor bildet;
- ein zweiter Stoffanteil (5) auf dem Sensor (2) angeordnet wird, auf einer dem ersten Teil (11) der Dichtung (10) gegenüberliegenden Seite des Sensors, wobei der zweite Stoffanteil ebenfalls mit dem zweiten Elastomer imprägniert und auf zwei gegenüberliegenden Seiten des zweiten Stoffanteils mit der Haftgrundierung beschichtet ist, so dass die Haftgrundierung eine dritte Schnittstelle zwischen dem zweiten Stoffanteil und dem Sensor bildet und am Ende von Schritt /3/ eine vierte Schnittstelle zwischen dem zweiten Stoffanteil und dem zweiten Teil (12) der Dichtung bildet;
wobei Schritt /3/ so durchgeführt wird, dass das erste Elastomer in der zweiten Menge des verformbaren Materials mit Dichtungsfunktion, das dazu bestimmt ist, den zweiten Teil (12) der Dichtung (10) zu bilden, und das zweite Elastomer, mit dem der erste (4) und der zweite (5) Stoffanteil imprägniert sind, gleichzeitig vulkanisiert werden.

## Claims

1. Seal (10) of generally annular shape, comprising at least a portion of a deformable material having a sealing function, at least one sensor (2) which is incorporated into the portion of deformable material having a sealing function, and connection means (3), such that the sensor is arranged to perform at least one measurement while the seal is in use, and the connection means are arranged to transmit at least one measurement result to a monitoring or recording unit,
**characterized in that** two sensors are provided in the seal of generally annular shape, each of the sensors (2) being adhered to the deformable material having a sealing function inside the seal (10), the deformable material having a sealing function comprising a first elastomer,
and **in that**, for each sensor among said two sensors, at least a portion of a fabric (4, 5) impregnated with a second elastomer is arranged between the sensor (2) and the deformable material having a sealing function, each surface of the sensor (2) among two opposite surfaces of this sensor being adhered to the deformable material having a sealing function, by means of a stack which comprises:
- a film of an adhesion primer (6, 8), which covers at least a portion of the surface of the sensor (2) while being in contact with said surface of the sensor;
- the portion of fabric (4, 5) impregnated with the second elastomer, which covers the film of the adhesion primer (6, 8) while being in contact with this film of the adhesion primer; and
- another film of the adhesion primer (7, 9), which is located between the portion of fabric (4, 5) impregnated with the second elastomer and the deformable material having a sealing function, while being in contact with said portion of fabric impregnated with the second elastomer and with said deformable material having a sealing function.

2. Seal (10) according to claim 1, wherein the two sensors comprise:
- a first sensor (2) in the form of a pressure sensor which is arranged inside the seal near an outer surface of said seal, so as to measure an application pressure of said outer surface of the seal against a rigid exterior surface; and
- a second sensor (2) in the form of a pressure sensor which is arranged inside the seal near an outer surface of said seal, so as to measure a pressure of a fluid on said outer surface of the seal.

3. Seal (10) according to claim 1 or 2, wherein the first elastomer constituting the deformable material having a sealing function (10, 11) is based on acrylonitrile butadiene and the second elastomer for impregnation of the portions of fabric (4, 5) is based on acrylonitrile butadiene.

4. Seal (10) according to claim 3, wherein the adhesion primer is based on a mixture which comprises ethylbenzene (C₆H₅-C₂H₅), tetrachloroethylene (C₂Cl₄), trizinc bis(orthophosphate) (Zn₃(PO₄)₂), and dimethylbenzene (C₆H₄-(CH₃)₂).

5. Seal (10) according to any one of the preceding claims, intended to be subjected to the pressure of a fluid on an outer surface of the seal in a state where it is installed within a hydroelectric power station valve.

6. Seal (10) according to any one of the preceding claims, wherein a surface of a sensor (2) among said two sensors, which is adhered to the deformable material having a sealing function, is based on polyimide.

7. Seal (10) according to claim 2, wherein the seal, of generally annular shape, has a cross-section coincident with two respective positions for the first and second pressure sensors, the second sensor being located near a groove (G) of the seal able to be exposed to the fluid against which the seal (10) is to establish fluidtightness.

8. Method for manufacturing a seal (10), comprising the following steps:
/1/ producing a first part (11) of the seal (10), by molding a first amount of a deformable material having a sealing function;
/2/ placing a sensor (2) on the first part (11) of the seal (10), with connection means (3) which are arranged to transmit a measurement result intended to be produced by the sensor; and
/3/ producing a second part (12) of the seal (10), by overmolding a second amount of the deformable material having a sealing function, starting from the first part (11) of the seal, such that the sensor (2) is adhered to the deformable material having a sealing function of the first and second parts of the seal, between said first and second parts of the seal;
knowing that the deformable material having a sealing function comprises a first elastomer and at least a portion of a fabric (4, 5) impregnated with a second elastomer is arranged between the sensor (2) and the deformable material having a sealing function, such that each surface of the sensor (2) among two opposite surfaces of this sensor is adhered to the deformable material having a sealing function by means of a stack which comprises:
- the film of the adhesion primer (6, 8), which directly covers at least a portion of the surface of the sensor (2);
- the portion of fabric (4, 5) impregnated with the second elastomer, which covers the film of the adhesion primer (6, 8) while being in contact with said first film of the adhesion primer; and
- another film of the adhesion primer (7, 9), which is located between the portion of fabric (4, 5) impregnated with the second elastomer and the deformable material having a sealing function, while being in contact with said portion of fabric impregnated with the second elastomer and with said deformable material having a sealing function,
whereby the two films of the adhesion primer (6-9) are located on two opposite sides of the portion of fabric (4, 5) impregnated with the second elastomer.

9. Method according to claim 8, wherein
step /1/ comprises introducing into a mold the first amount of the deformable material having a sealing function, in a raw form of said first elastomer, and applying a first vulcanization heat treatment to form the first part (11) of the seal (10);
in step /2/, the sensor (2) is placed on the first part (11) of the seal (10) with said at least one film of an adhesion primer (6, 7) which is placed between the sensor and the first part of the seal, then the sensor is covered with at least one other film of the adhesion primer (8, 9) on a surface of the sensor which is intended to be covered by the second part (12) of the seal during step /3/; and
step /3/ comprises introducing into the mold, in a manner complementary to the first part (11) of the seal (10) carrying the sensor (2), the second amount of the deformable material having a sealing function, in the raw form of said first elastomer, then applying a second vulcanization heat treatment to form the second part (12) of the seal and to finalize the adhesion between the sensor (2) and the first and second parts of the seal.

10. Method according to claim 9, wherein, in step /2/:
- the sensor (2) is placed on the first part (11) of the seal (10) by interposing, between said sensor and said first part of the seal, a first portion of fabric (4) which is impregnated with a second elastomer and coated with the adhesion primer on two opposite sides of said first portion of fabric, so that the adhesion primer constitutes a first interface between the first portion of fabric and the first part of the seal, and constitutes a second interface between the first portion of fabric and the sensor;
- a second portion of fabric (5) is placed on the sensor (2), on a side of said sensor opposite to the first part (11) of the seal (10), said second portion of fabric also being impregnated with the second elastomer and coated with the adhesion primer on two opposite sides of said second portion of fabric, so that the adhesion primer constitutes a third interface between the second portion of fabric and the sensor, and constitutes at the end of step /3/ a fourth interface between the second portion of fabric and the second part (12) of the seal;
and step /3/ is carried out so that the first elastomer in the second amount of the deformable material having a sealing function, which is intended to form the second part (12) of the seal (10), and the second elastomer which is impregnated in the first (4) and second (5) portions of fabric, are vulcanized simultaneously.
